# EUROPEAN PATENT SPECIFICATION

(11) **EP 3 147 740 B1**
(45) Date of publication and mention of the grant of the patent: **06.05.2020**
(21) Application number: 16189990.1
(22) Date of filing: 21.09.2016
(51) Int. Cl.: G05D 1/00, G05D 1/02, G05D 1/08, B62K 11/00

(54) **CONTROL METHOD AND APPARATUS FOR TWO-WHEEL BALANCE CAR, COMPUTER PROGRAM AND RECORDING MEDIUM**
STEUERUNGSVERFAHREN UND VORRICHTUNG FÜR EINEN ZWEIRÄDRIGEN SPANNWAGEN, COMPUTERPROGRAMM UND AUFZEICHNUNGSMEDIUM
PROCÉDÉ ET APPAREIL DE COMMANDE POUR CHARIOT TENDEUR À DEUX ROUES, PROGRAMME INFORMATIQUE ET SUPPORT D'ENREGISTREMENT

(30) Priority: 28.09.2015 CN 201510626948
(43) Date of publication of application: 29.03.2017
(73) Proprietor: Xiaomi Inc., Beijing 100085 (CN)
(72) Inventor: LIU, Huayijun, Beijing 100085 (CN); TANG, Mingyong, Beijing 100085 (CN); CHEN, Tao, Beijing 100085 (CN)
(74) Representative: Cabinet Beau de Loménie

(56) References cited:
- JP-A- 2007 219 986
- JP-A- 2009 248 772
- US-A1- 2012 166 048

## Description

### TECHNICAL FIELD

The present disclosure relates to the field of automatic control, in particular to a control method and apparatus for a two-wheel balance car, a computer program and a recording medium.

### BACKGROUND

Two-wheel balance car is also known as two-wheel electric balance car, and now it is a new kind of short-distance transportation means.

The two-wheel balance car generally has two parallel wheels and a turning control component, and is driven by an internal driving motor to go forward or backward; when going forward or backward, the user can control the two-wheel balance car to turn around by means of the turning control component. If there is an obstacle in front of one of the wheels of the two-wheel balance car, and the wheel is stopped or locked, while the other wheel continues moving, it will bring "centrifugal movement" that may cause the driver to fall over.

Document US 2012/0166048 discloses an inverted pendulum type moving body providing an automatic obstacle avoiding operation mode.

### SUMMARY

To overcome the above problems in the related arts, the present disclosure provides a control method for a two-wheel balance car, a computer program and a recording medium.

According to a first aspect, the invention relates to a control method used for a two-wheel balance car comprising two parallel wheels and a turning control component. The method comprises:
identifying the type of an obstacle in front of any of the wheels, and the type comprising: impassable obstacle;
if the type of the obstacle is impassable obstacle, controlling the two-wheel balance car to decelerate, and shield the turning control component.

In this embodiment, the type also comprises: passable obstacle; the method further comprises:
if the type of the obstacle is passable obstacle, increasing a driving force to the two-wheel balance car to continue moving.

In one embodiment, the step of identifying the type of an obstacle in front of any of the wheels comprises:
measuring the height of the obstacle in front of any of the wheels by means of a distance measuring component;
detecting whether the height of the obstacle is greater than a predetermined threshold;
if the height of the obstacle is greater than the predetermined threshold, identifying the obstacle as impassable type.

In one embodiment, the step of identifying the type of an obstacle in front of any of the wheels comprises:
acquiring an image frame in front of any of the wheels by means of an image acquiring component;
identifying the obstacle in the image frame;
calculating the height of the obstacle identified;
detecting whether the height of the obstacle is greater than a predetermined threshold;
if the height of the obstacle is greater than the predetermined threshold, identifying the obstacle as impassable type.

In one embodiment, the method further comprises:
measuring a distance from the obstacle to the two-wheel balance car;
detecting whether the distance is less than a predetermined distance;
if the distance is less than the predetermined distance, executing the step of controlling the two-wheel balance car to decelerate and shield the turning control component.

In one embodiment, the method further comprises:
if the type of the obstacle is impassable obstacle, providing an obstacle prompt in a predetermined mode;
wherein, the predetermined mode comprises at least one of playing a prompt tone, vibrating a predetermine part of the two-wheel balance car, and flickering a signal light.

According to a second aspect, the invention relates to a control apparatus used for a two-wheel balance car comprising two parallel wheels and a turning control component. The apparatus comprises:
an identifying module configured to identify the type of an obstacle in front of any of the wheels, and the type comprising: impassable obstacle;
a control module configured to control the two-wheel balance car to decelerate, and shield the turning control component, when the type of the obstacle identified by the identifying module is impassable obstacle,.

In this embodiment, the type also comprises: passable obstacle; the apparatus further comprises:
an accelerating module configured to, if the type of the obstacle identified by the identifying module is passable obstacle, increase a driving force to the two-wheel balance car to continue moving.

In one embodiment, the identifying module comprises:
a height measuring sub-module configured to measure a height of the obstacle in front of any of the wheels by means of a distance measuring component;
a first detecting sub-module configured to detect whether the height of the obstacle measured by the height measuring sub-module is greater than a predetermined threshold;
a first identifying sub-module configured to identify the obstacle as impassable type, when the height of the obstacle detected by the first detecting sub-module is greater than the predetermined threshold.

In one embodiment, the identifying module further comprises:
an image acquiring sub-module configured to acquire an image frame in front of any of the wheels by means of an image acquiring component;
an image identifying sub-module configured to identify the obstacle in the image frame acquired by the image acquiring sub-module;
a height calculating sub-module configured to calculate the height of the obstacle identified by the image identifying sub-module;
a second detecting sub-module configured to detect whether the height of the obstacle calculated by the height calculating sub-module is greater than a predetermined threshold;
a second identifying sub-module configured to identify the obstacle as impassable type, when the height of the obstacle detected by the second detecting sub-module is greater than the predetermined threshold.

In one embodiment, the apparatus further comprises:
a distance measuring module configured to measure a distance from the obstacle to the two-wheel balance car;
a distance detecting module configured to detect whether the distance measured by the distance measuring module is less than a predetermined distance;
a control module configured to control the two-wheel balance car to decelerate, and shield the turning control component, when the distance detected by the distance detecting module is less than the predetermined distance.

In one embodiment, the apparatus further comprises:
a prompt module configured to, if the type of the obstacle identified by the identifying module is impassable obstacle, provide an obstacle prompt in a predetermined mode;
wherein, the predetermined mode comprises at least one of playing a prompt tone, vibrating a predetermine part of the two-wheel balance car, and flickering a signal lights.

According to a third aspect, the invention relates to a two-wheel balance car comprising two parallel wheels, the two-wheel balance car comprising:
a control chip;
a storage for storing instructions executable by the control chip;
a turning control component connected to the control chip;
wherein, the control chip is configured to:
   identify the type of an obstacle in front of any of the wheels, and the type comprises: impassable obstacle;
   if the type of the obstacle is impassable obstacle, control the two-wheel balance car to decelerate, and shield the turning control component.

In one particular embodiment, the steps of the control method used for a two-wheel balance car are determined by computer program instructions.

Consequently, according to a fourth aspect, the invention is also directed to a computer program for executing the steps of a control method used for a two-wheel balance car as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

In one embodiment, the information medium can be an integrated circuit in which the program is incorporated, the circuit being adapted to execute the method in question or to be used in its execution.

The technical solution provided in the embodiments of the present disclosure may have the following advantageous effects: identifying the type of the obstacle in front of any of the wheels, and if the type of the obstacle is impassable obstacle, controlling the two-wheel balance car to decelerate and shield the turning control component; and it solves the problem that the driver may fall over due to the "centrifugal movement" produced when one of the wheels of the two-wheel balance car is stopped or locked by an impassable obstacle in front of the wheel while the other wheel continues moving forward, and thereby achieving the effect of preventing the user from falling over as far as possible, when one of the wheels is stuck in the use of the two-wheel balance car.

It should be understood that both the foregoing general description and the following detailed description are only exemplary and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram showing an implementing environment involved in the control method for a two-wheel balance car according to the exemplary embodiments of the present disclosure;
Fig. 2 is a flowchart showing a control method for a two-wheel balance car according to an exemplary embodiment;
Fig. 3 is a flowchart showing a control method for a two-wheel balance car according to an exemplary embodiment;
Fig. 4 is a diagram showing the implementing effect of identifying an obstacle by a distance measuring component according to an exemplary embodiment;
Fig. 5 is a flowchart showing a control method for a two-wheel balance car according to an exemplary embodiment;
Fig. 6 is a diagram showing the implementing effect of identifying an obstacle in an image frame according to an exemplary embodiment;
Fig. 7 is a flowchart showing a control apparatus for a two-wheel balance car according to an exemplary embodiment;
Fig. 8 is a flowchart showing a control apparatus for a two-wheel balance car according to another exemplary embodiment;
Fig. 9 is a block diagram showing a two-wheel balance car according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

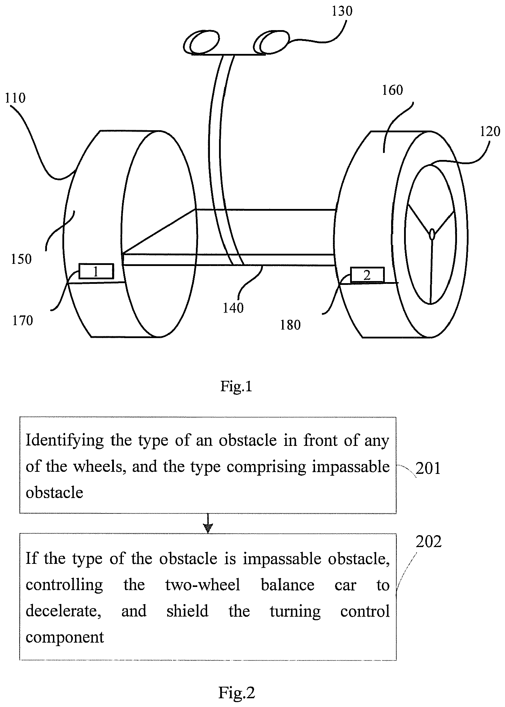

Fig. 1 is a schematic diagram showing an implementing environment involved in the control method for a two-wheel balance car according to an exemplary embodiment of the present disclosure. As shown in Fig. 1, the implementing environment may be a two-wheel balance car comprising two parallel wheels 110 and 120, two wheel housings 150 and 160 corresponding with the two parallel wheels above, a turning control component 130, a load bearing pedal 140 and obstacle identification components 170 and 180.

The turning control component 130 is connected with the load bearing pedal 140 and can be used to control turning of the two-wheel balance car. The turning control component 130 can be implemented through manual control, and can also be implemented through leg control, and this will not be limited in the embodiment.

The obstacle identification component 170 is used for identifying an obstacle in front of the wheel of the two-wheel balance car at the right side of the heading direction; the obstacle identification component 180 is used for identifying an obstacle in front of the wheel of the two-wheel balance car at the left side of the heading direction. The obstacle identification components 170 and 180 can be any distance measuring components capable of identifying the size and distance of an object, such as infrared ray sensing apparatus, ultrasonic wave sensing apparatus and laser range finder, etc.; the obstacle identification components 170 and 180 can also be any image acquiring components capable of capturing images, such as a camera.

In Fig. 1, the obstacle identification component 170 is provided merely as an example at position 1 of the wheel housing 150, and the obstacle identification component 180 is provided merely as an example at position 2 of the wheel housing 160. The obstacle identification components 170 and 180 may also be positioned at any possible positions of the two-wheel balance car foreseeable for a person skilled in the art, such as the position where the load bearing pedal 140 is engaged with the turning control component 130. Besides, the number of the obstacle identification components 170 and 180 is given as two as an example in this embodiment, while the number should be at least one, and this will not be limited in the embodiment.

What needs to be specified in supplement is that, the two-wheel balance car may also comprise other components, such as a control chip, a storage, and a driving motor, etc. (not shown in the figures). Wherein, the control chip is connected to the driving motor and the above mentioned turning control component 130 and obstacle identification components 170 and 180, and controls the moving forward, moving backward, stop and turning of the two-wheel balance car according to the executable instructions stored in the storage. This part of content will not be described expansively in the embodiments of the present disclosure.

Fig. 2 is a flowchart showing a control method for a two-wheel balance car according to an exemplary embodiment. As shown in Fig. 2, this embodiment illustrates by applying the control method for a two-wheel balance car to the implementing environment shown in Fig. 1, and the control method for a two-wheel balance car comprises the following steps.

In step 201, the type of an obstacle in front of any of the wheels is identified, and the type comprises: impassable obstacle.

In one embodiment, the control chip identifies the type of an obstacle in front of any of the wheels by means of an obstacle identification component.

In one embodiment, the obstacle identification component comprises: a distance measuring component and/or an image acquiring component.

In step 202, if the type of the obstacle is impassable obstacle, the two-wheel balance car is controlled to decelerate, and the turning control component is shielded.

In conclusion, identifying the type of the obstacle in front of any of the wheels, and if the type of the obstacle is impassable obstacle, controlling the two-wheel balance car to decelerate and shield the turning control component, the control method for a two-wheel balance car provided in this embodiment solves the problem that the driver may fall over due to the "centrifugal movement" produced when one of the wheels of the two-wheel balance car is stopped or locked by an impassable obstacle in front of the wheel while the other wheel continues moving forward, and thereby achieving the effect of preventing, the user from falling over as far as possible when one of the wheels is stuck in the use of the two-wheel balance car.

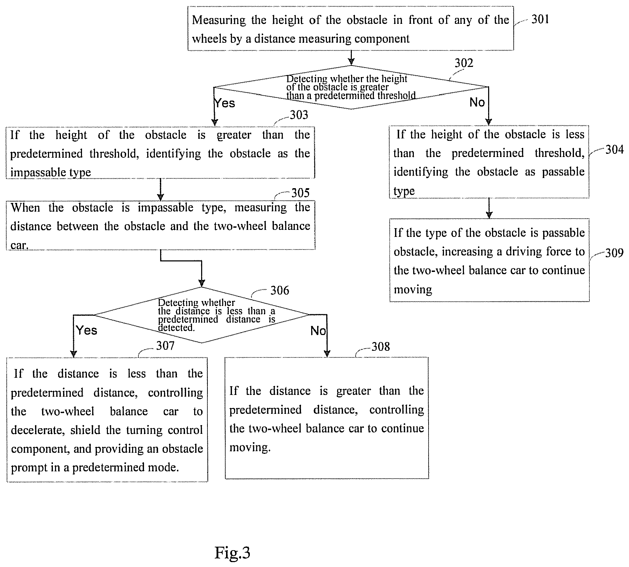

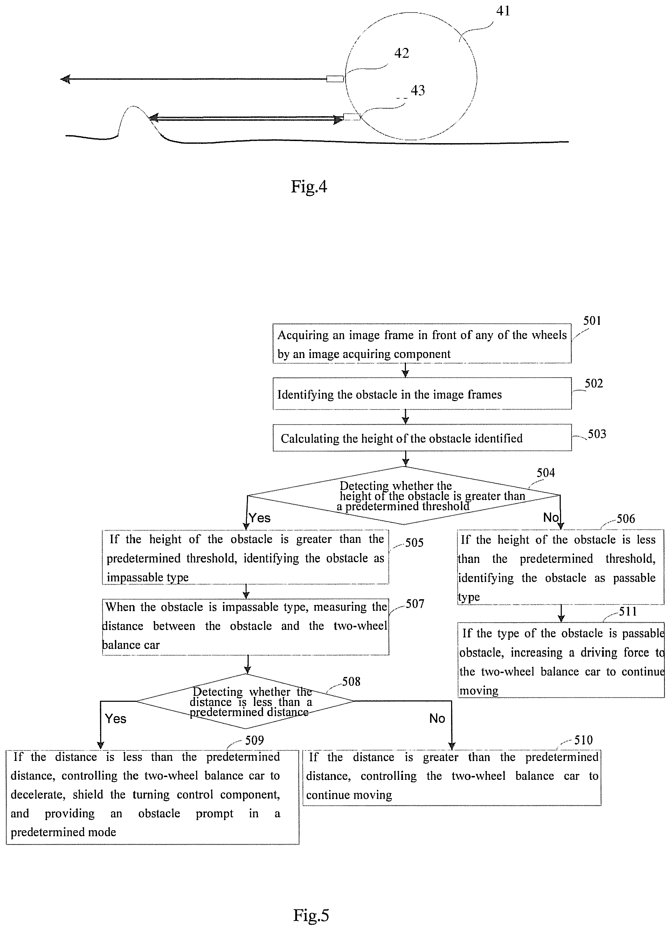

In one embodiment, there are two methods for identifying the type of an obstacle in front of any of the wheels in step 201:
the first method is identifying the type of the obstacle by means of the distance measuring component, which will be elaborated with the embodiment shown in Fig. 3 in the following.
the second method is identifying the type of the obstacle by means of the image acquiring component, which will be elaborated with the embodiment shown in Fig. 4 in the following.

Fig. 3 is a flowchart showing a control method for a two-wheel balance car according to an exemplary embodiment. As shown in Fig. 3, this embodiment illustrates by applying the control method for a two-wheel balance car to the implementing environment shown in Fig. 1, and the method comprises the following steps.

In step 301, the height of the obstacle in front of any of the wheels is measured by a distance measuring component.

The control chip of the two-wheel balance car controls the distance measuring component to transmit a detection signal outwards at intervals at every predetermined time, and the detection signal may be laser, infrared ray and ultrasonic wave, etc.. A reflected signal will be returned when the detection signal encounters an obstacle. Thus, when the distance measuring component receives the reflected signal, it indicates that there is an obstacle in the front.

In one embodiment, a distance measuring component is respectively mounted on each of the two wheel housings of the two-wheel balance car, and, if the distance measuring component on one of the wheels of the two-wheel balance car receives the reflected signal, it indicates that there is an obstacle in front of the wheel. The height of the obstacle is not lower than the mounting height of the distance measuring component, that is, the mounting height of the distance measuring component defines the detectable height of the obstacle.

For example, the distance measuring component mounted on each of the wheel housings of the two-wheel balance car is located at a position 5cm from the ground, if any of the wheels of the two-wheel balance car receives the reflected signal of the transmitted signal, it indicates that there is an obstacle with a height of at least 5cm in front of the wheel; and if any of the wheels of the two-wheel balance car does not receive the reflected signal, it indicates that there does is no obstacle with a height of over 5cm in front of the wheel.

In actual implementations, the distance measuring component may also be mounted at the position where the load bearing pedal is engaged with the turning control component. And whether the position of the obstacle is at the left wheel or at the right wheel of the two-wheel balance car is judged according to whether the received reflected signal from the left side or the right side, and this will not be limited in the embodiment.

In step 302, whether the height of the obstacle is greater than a predetermined threshold is detected;

The distance measuring component mounted on the wheel housings of the two-wheel balance car is provided at a position at a predetermined threshold from the ground. The predetermined threshold is the maximum height of the obstacle that can be passed by the two-wheel balance car. The predetermined threshold may be 1/x of the height of the tyre or other numerical values, and this will not be limited in the embodiment.

The distance measuring component continuously transmits a detection signal outwards, and when the reflected signal of the detection signal is received, it indicates that there is an obstacle with a height greater than the predetermined threshold in front of the wheel; and if the reflected signal is not received, it indicates that there is no obstacle with a height greater than the predetermined threshold in front of the wheel.

In one embodiment, two distance measuring components may be mounted respectively on each of the two wheel housings of the two-wheel balance car in a vertical direction, the two distance measuring components on each of the wheels are arranged one above the other, and the connecting line thereof is perpendicular to the ground. The distance from the upper distance measuring component to the ground is the predetermined threshold, and the distance from the lower distance measuring component to the ground may be the maximum height of the obstacle that can be passed by the two-wheel balance car without acceleration.

When the upper distance measuring component corresponding with any of the two wheels receives the reflected signal, it indicates that there is an obstacle in front of the wheel that cannot be passed by the two-wheel balance car.

When the upper distance measuring component corresponding with any of the two wheels does not receive the reflected signal, it indicates that there is an obstacle in front of the wheel that can be passed by the two-wheel balance car only when accelerated.

When neither of the two distance measuring components corresponding with any of the two wheels has received the reflected signal, it can be considered that there is no obstacle in front of the wheel.

This embodiment only provides, as an example, a method of detecting the height of an obstacle in the front by means of the distance measuring component, but not limit how to use the distance measuring component to detect the height of the obstacle in the front.

In one embodiment, as shown in Fig. 4, the two distance measuring components 42 and 43 on the wheel 41 transmit a detection signal outwards, wherein if the distance measuring component 42 does not receive the reflected signal and the distance measuring component 43 receives the reflected signal, there is a passable obstacle in front of the wheel 41.

In step 303, if the height of the obstacle is greater than the predetermined threshold, the obstacle is identified as impassable type.

When the distance measuring component on any of the wheel housings of the two-wheel balance car receives the reflected signal of the detection signal, it indicates that there is an obstacle with a height that reaches the predetermined threshold in front of the wheel, at this time, the two-wheel balance car identifies the obstacle as an impassable type obstacle.

When the obstacle is impassable type, turn to step 305.

In step 304, if the height of the obstacle is less than the predetermined threshold, the obstacle is identified as passable type.

When there is an obstacle in front of any of the wheels and the height of the obstacle is less than the predetermined threshold, the obstacle is identified as passable type.

When the obstacle is passable type, turn to step 309.

In step 305, when the obstacle is impassable type, the distance between the obstacle and the two-wheel balance car is measured.

In one embodiment, the control chip measures the distance between the obstacle in front of any of the wheels and the two-wheel balance car by means of the distance measuring component. For example, the control chip acquires the distance by calculation according to the transmission time of the detection signal and the reception time of the reflected signal, in combination with the traveling speed of the two-wheel balance car.

In step 306, detect whether the distance is less than a predetermined distance is detected.

The control chip detects whether the distance between the obstacle and the two-wheel balance car is less than the predetermined distance.

In one embodiment, the predetermined distance is the maximum distance needed when the two-wheel balance car turns. The predetermined distance may be x times of the diameter of the tyre or other numerical values, and will not be limited in the embodiment.

If the distance is less than the predetermined distance, turn to step 307; and if the distance is greater than the predetermined distance, turn to step 308.

In step 307, if the distance is less than the predetermined distance, the two-wheel balance car is controlled to decelerate, the turning control component is shielded, and an obstacle prompt is provided in a predetermined mode.

If the distance is less than the predetermined distance, the control chip controls the two-wheel balance car to decelerate to stop. However, the situation where the two-wheel balance car collides with the obstacle during the deceleration is also possible to happen.

Meanwhile, if the distance is less than the predetermined distance, the control chip also shields the turning control component. At this time, the user will not be able to control the two-wheel balance car to turn. Even if the two-wheel balance car collides with the obstacle during deceleration, and the user performs a misoperation on the turning control component during the collision due to losing control of his body, the control chip still will not respond to the misoperation.

In one embodiment, the control chip also provides an obstacle prompt in a predetermined mode, wherein the predetermined mode comprises at least one of playing a prompt tone, vibrating a predetermine part of the two-wheel balance car, and flickering a signal light.

For example, when it is identified that there is an impassable obstacle in front of one of the wheels of the two-wheel balance car, and the distance between the impassable obstacle and the two-wheel balance car reaches the predetermined distance, the two-wheel balance car will make out a beep prompt tone.

In step 308, if the distance is greater than the predetermined distance, the two-wheel balance car is controlled to continue moving.

In step 309, if the type of the obstacle is passable obstacle, a driving force is increased to the two-wheel balance car to continue moving.

When the obstacle in front of any of the wheels of the two-wheel balance car is identified as a passable obstacle, the control chip controls a driving motor to increase the driving force to the two-wheel balance car to move on.

In conclusion, identifying the type of the obstacle in front of any of the wheels, and if the type of the obstacle is impassable obstacle, controlling the two-wheel balance car to decelerate and shield the turning control component, the control method for a two-wheel balance car provided in this embodiment solves the problem that the driver may fall over due to the "centrifugal movement" produced when one of the wheels of the two-wheel balance car is stopped or locked by an impassable obstacle in front of the wheel while the other wheel continues moving forward, and thereby achieving the effect of preventing the user from falling over as far as possible, when one of the wheels is stuck in the use of the two-wheel balance car.

The control method for a two-wheel balance car provided in this embodiment measures the height and distance of the obstacle by means of the distance measuring component, and thereby enables the two-wheel balance car to identify the type of the obstacle and take an action to decelerate and shield the turning control component according to the distance between the obstacle and the two-wheel balance car.

The control method for a two-wheel balance car provided in this embodiment also shields the turning control component when the distance between the obstacle and the two-wheel balance car is less than a predetermined distance, so that even if the two-wheel balance car collides with the obstacle during deceleration, and the user performs a misoperation on the turning control component during the collision due to losing control of his body, the control chip still will not respond to the misoperation, thereby effectively reducing the possibility for the user to fall over.

Fig. 5 is a flowchart showing a control method for a two-wheel balance car according to an exemplary embodiment. As shown in Fig. 5, this embodiment illustrates by applying the control method of a two-wheel balance car to the implementing environment shown in Fig. 1, and the method comprises the following steps.

In step 501, an image frame in front of any of the wheels is acquired by an image acquiring component.

The image acquiring component may be mounted on each the two wheel housings of the two-wheel balance car, and may also be mounted at the part where the load bearing pedal is engaged with the turning control component.

The control chip controls the image acquiring component to acquire images in front of the two wheels to form continuous image frames.

In step 502, the obstacle in the image frames is identified.

Since a color difference between the ground and other objects on the ground is very obvious, the ground and other objects in the image frames can be determined according to pixel change in the image frames.

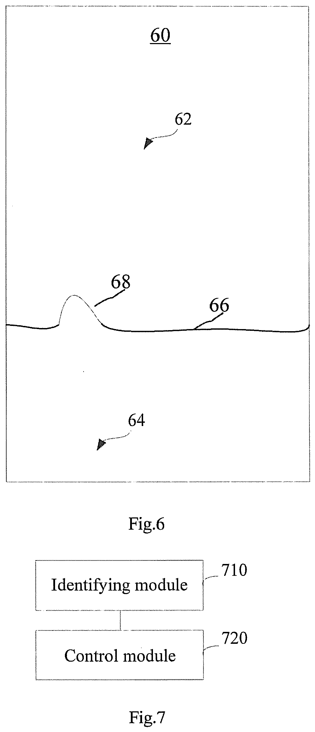

In one embodiment, as shown in Fig. 6, the control chip obtains an image frame 60 acquired by the image acquiring component, then acquires a first region 62 and a second region 64 by binary process of the image frame 60 according to the color difference, and a road line 66 is formed at the intersection of the first region 62 and second region 64. The control chip detects whether the road line 66 has a protrusion 68. If the road line 66 has a protrusion 68, the control chip identifies the protrusion 68 as an obstacle.

In step 503, the height of the obstacle identified is calculated.

As a first possible implementing method, the control chip calculates the height of the obstacle according to the height of the obstacle in the image frame and a predetermined measuring scale, for example, if the predetermined measuring scale is 1:3, when the height of the obstacle in the image frame is 1cm, the height of the obstacle calculated is 3cm. The obstacle is closer to the two-wheel balance car, the height of the obstacle calculated is also closer.

As a second possible implementing method, the two-wheel balance car is also provided with a distance measuring component, used to measure the distance from the obstacle to the two-wheel balance car. The control chip first searches for a measuring scale corresponding with the distance, and then calculates the height of the obstacle according to the height of the obstacle in the image frame and the measuring scale corresponding with the distance, for example, if the measuring scale corresponding with the distance is 1:5, when the height of the obstacle in the image frame is 1cm, the height of the obstacle calculated is 5cm.

As a third possible implementing method, there are two image acquiring components, and the control chip can calculate the actual height of the obstacle according to the protrusion (i.e., the obstacle) in two image frames acquired by the two image acquiring components in combination with the binocular imaging principle.

It needs to be noted that this embodiment will not limit the way by which the control chip calculates the height of the obstacle.

In step 504, whether the height of the obstacle is greater than a predetermined threshold is detected.

The control chip detects whether the height of the obstacle calculated is greater than a predetermined threshold.

In one embodiment, the predetermined threshold is the maximum height of the obstacle that can be passed by the two-wheel balance car.

If the height of the obstacle is greater than the predetermined threshold, turn to step 505;
if the height of the obstacle is less than the predetermined threshold, turn to step 506;

In step 505, if the height of the obstacle is greater than the predetermined threshold, the obstacle is identified as impassable type.

When the obstacle is impassable type, turn to step 507 is entered.

In step 506, if the height of the obstacle is less than the predetermined threshold, the obstacle is identified as passable type.

When the obstacle is passable type, turn to step 511.

In step 507, when the obstacle is impassable type, the distance between the obstacle and the two-wheel balance car is measured.

In one embodiment, the control chip measures the distance between the obstacle and the two-wheel balance car by means of the image acquiring component. As a possible implementing method, there are two image acquiring components, and the control chip can calculate the distance between the obstacle and the two-wheel balance car according to the image frames respectively acquired by the two image acquiring components in combination with the binocular imaging principle.

In one embodiment, the control chip measures the distance between the obstacle in front of any of the wheels and the two-wheel balance car by means of the distance measuring component. For example, the control chip acquires the distance by calculation according to the transmission time of the detection signal and the reception time of the reflected signal, in combination with the traveling speed of the two-wheel balance car, and this is not limited in the embodiment.

In step 508, whether the distance is less than a predetermined distance is detected.

The control chip detects whether the distance between the obstacle and the two-wheel balance car is less than the predetermined distance.

In one embodiment, the predetermined distance is the maximum distance needed when the two-wheel balance car turns. The predetermined distance may be x times of the diameter of the tyre or other numerical values, and will not be limited in this embodiment.

If the distance is less than the predetermined distance, turn to step 509; and if the distance is greater than the predetermined distance, turn to step 510 .

In step 509, if the distance is less than the predetermined distance, the two-wheel balance car is controlled to decelerate, the turning control component is shielded, and an obstacle prompt is provided in a predetermined mode.

If the distance is less than the predetermined distance, the control chip controls the two-wheel balance car to decelerate to stop. However, the situation where the two-wheel balance car collides with the obstacle during deceleration is also possible to happen.

Meanwhile, if the distance is less than the predetermined distance, the control chip also shields the turning control component. At this time, the user will not be able to control the two-wheel balance car to turn. Even if the two-wheel balance car collides with the obstacle during deceleration, and the user performs a misoperation on the turning control component during the collision due to losing control of his body, the control chip still will not respond to the misoperation.

In one embodiment, the control chip also provides the obstacle prompt in a predetermined mode, wherein the predetermined mode comprises at least one of playing a prompt tone, vibrating a predetermine part of the two-wheel balance car, and flickering a signal light.

For example, when it is identified that there is an impassable obstacle in front of one of the wheels of the two-wheel balance car, and the impassable obstacle reaches in the predetermined distance from the two-wheel balance car, the two-wheel balance car will give out a prompt tone of "obstacles ahead".

In step 510, if the distance is greater than the predetermined distance, the two-wheel balance car is controlled to continue moving.

In step 511, if the type of the obstacle is passable obstacle, a driving force is increased to the two-wheel balance car to continue moving.

When the obstacle in front of any of the wheels of the two-wheel balance car is identified as a passable obstacle, the control chip controls a driving motor to increase the driving force to the two-wheel balance car to move on.

In conclusion, by identifying the type of the obstacle in front of any of the wheels, and if the type of the obstacle is impassable obstacle, controlling the two-wheel balance car to decelerate and shield the turning control component, the control method for a two-wheel balance car provided in this embodiment solves the problem that the driver may fall over due to the "centrifugal movement" produced when one of the wheels of the two-wheel balance car is stopped or locked by an impassable obstacle in front of the wheel while the other wheel continues moving forward, and thereby achieving the effect of preventing the user from falling over as far as possible, when one of the wheels is stuck in the use of the two-wheel balance car.

The control method for a two-wheel balance car provided in this embodiment measures the height and distance of the obstacle by means of the image acquiring component, thereby enables the two-wheel balance car to identify the type of the obstacle and take an action to decelerate and shield the turning control component according to the distance between the obstacle and the two-wheel balance car.

The control method for a two-wheel balance car provided in this embodiment also shields the turning control component when the distance between the obstacle and the two-wheel balance car is less than a predetermined distance, so that even if the two-wheel balance car collides with the obstacle during deceleration, and the user performs a misoperation on the turning control component during the collision due to losing control of his body, the control chip still will not respond to the misoperation, thereby effectively reducing the possibility for the user to fall over.

The following are apparatus embodiments of the present disclosure, used to execute the method embodiments of the present disclosure. As for details undisclosed in the apparatus embodiments of the present disclosure, reference can be made to the method embodiments of the present disclosure.

Fig. 7 is a block diagram showing a control apparatus for a two-wheel balance car according to an exemplary embodiment. As shown in Fig. 7, the control apparatus for a two-wheel balance car is used in the control method for a two-wheel balance car in the implementing environment shown in Fig. 1. The control apparatus for a two-wheel balance car comprises but is not limited to an identifying module 710 and a control module 720.

The identifying module 710 is configured to identify the type of an obstacle in front of any of the wheels, and the type comprises: impassable obstacle;
the control module 720 is configured to control the two-wheel balance car to decelerate, and shield the turning control component, when the type of the obstacle identified by the identifying module 710 is impassable obstacle.

In conclusion, identifying the type of the obstacle in front of any of the wheels, and if the type of the obstacle is impassable obstacle, controlling the two-wheel balance car to decelerate and shield the turning control component, the control apparatus for a two-wheel balance car provided in this embodiment solves the problem that the driver may fall over due to the "centrifugal movement" produced when one of the wheels of the two-wheel balance car is stopped or stuck by an impassable obstacle in front of the wheel while the other wheel continues moving forward, and thereby achieving the effect of preventing the user from falling over as far as possible, when one of the wheels is stuck while in the use of the two-wheel balance car.

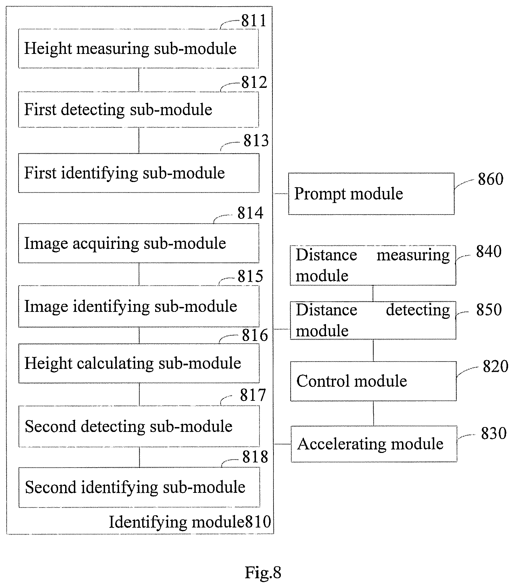

Fig. 8 is a block diagram showing a control apparatus for a two-wheel balance car according to another exemplary embodiment. As shown in Fig. 8, the control apparatus for a two-wheel balance car is used in the control method for a two-wheel balance car in the implementing environment shown in Fig. 1. The control apparatus for a two-wheel balance car comprises but is not limited to an identifying module 810 and a control module 820.

The identifying module 810 is configured to identify the type of an obstacle in front of any of the wheels, and the type comprises: impassable obstacle;
the control module 820 is configured to control the two-wheel balance car to decelerate, and shield the turning control component, when the type of the obstacle identified by the identifying module 810 is impassable obstacle.

In one embodiment, the type also comprises: passable obstacle; the apparatus further comprises: an accelerating module 830.

The accelerating module 830 is configured to, increase a driving force to the two-wheel balance car to continue to moving, if the type of the obstacle identified by the identifying module 810 is passable obstacle,.

In one embodiment, the identifying module 810 comprises: a height measuring sub-module 811, a first detecting sub-module 812 and a first identifying sub-module 813.

The height measuring sub-module 811 is configured to measure the height of the obstacle in front of any of the wheels by means of a distance measuring component;
the first detecting sub-module 812 is configured to detect whether the height of the obstacle measured by the height measuring sub-module 811 is greater than a predetermined threshold;
the first identifying sub-module 813 is configured to identify the obstacle as impassable type, when the height of the obstacle detected by the first detecting sub-module 812 is greater than the predetermined threshold.

In one embodiment, the identifying module 810 further comprises: an image acquiring sub-module 814, an image identifying sub-module 815, a height calculating sub-module 816, a second detecting sub-module 817 and a second identifying sub-module 818.

The image acquiring sub-module 814 is configured to acquire an image frame in front of any of the wheels by means of an image acquiring component;
the image identifying sub-module 815 is configured to identify the obstacle in the image frame acquired by the image acquiring sub-module 814;
the height calculating sub-module 816 is configured to calculate the height of the obstacle identified by the image identifying sub-module 815;
the second detecting sub-module 817 is configured to detect whether the height of the obstacle measured by the height calculating sub-module 816 is greater than a predetermined threshold;
the second identifying sub-module 818 is configured to, identify the obstacle as impassable type, when the height of the obstacle detected by the second detecting sub-module 817 is greater than the predetermined threshold.

In one embodiment, the control apparatus for a two-wheel balance car further comprises: a distance measuring module 840, a distance detecting module 850 and a control module 820.

The distance measuring module 840 is configured to measure a distance from the obstacle to the two-wheel balance car;
the distance detecting module 850 is configured to detect whether the distance measured by the distance measuring module 840 is less than a predetermined distance;
the control module 820 is configured to control the two-wheel balance car to decelerate, and shield the turning control component, when the distance detected by the distance detecting module 850 is less than the predetermined distance.

In one embodiment, the control apparatus for a two-wheel balance car further comprises: a prompt module 860.

The prompt module 860 is configured to provide an obstacle prompt in a predetermined mode, if the type of the obstacle identified by the identifying module 810 is impassable obstacle,;
wherein, the predetermined mode comprises at least one of playing a prompt tone, vibrating a predetermine part of the two-wheel balance car, and flickering a signal light.

In conclusion, identifying the type of the obstacle in front of any of the wheels, and if the type of the obstacle is impassable obstacle, controlling the two-wheel balance car to decelerate and shield the turning control component, the control apparatus for a two-wheel balance car provided in this embodiment solves the problem that the driver may fall over due to the "centrifugal movement" produced when one of the wheels of the two-wheel balance car is stopped or locked by an impassable obstacle in front of the wheel while the other wheel continues moving forward, and thereby achieving the effect of preventing the user from falling over as far as possible, when one of the wheels is stuck in the use of the two-wheel balance car.

The control method for a two-wheel balance car provided in this embodiment measures the height and distance of the obstacle by means of the image acquiring component, thereby enables the two-wheel balance car to identify the type of the obstacle and take an action to decelerate and shield the turning control component according to the distance between the obstacle and the two-wheel balance car.

The control method for a two-wheel balance car provided in this embodiment also shields the turning control component when the distance between the obstacle and the two-wheel balance car is less than a predetermined distance, so that even if the two-wheel balance car collides with the obstacle during deceleration, and the user performs a misoperation on the turning control component during the collision due to losing control of his body, the control chip still will not respond to the misoperation, thereby effectively reducing the possibility for the user to fall over. Regarding the apparatus in the above embodiments, the specific modes in which each module executes the operations have been described in detail in the embodiments of the relevant methods, and thus will not be elaborated here in detail.

An exemplary embodiment of the present disclosure provides a two-wheel balance car, which comprises two parallel wheels and is able to implement the control method for a two-wheel balance car provided in the present disclosure. The two-wheel balance car comprises: a control chip, a storage for storing instructions executable by the control chip, and a turning control component connected to the control chip.
wherein, the control chip is configured to:
identify the type of an obstacle in front of any of the wheels, and the type comprises: impassable obstacle;
if the type of the obstacle is impassable obstacle, control the two-wheel balance car to decelerate, and shield the turning control component.

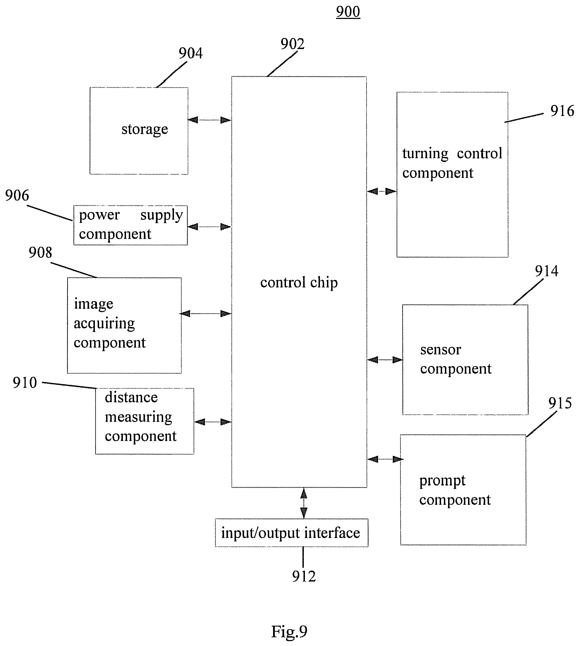

Fig. 9 is a block diagram showing a two-wheel balance car according to an exemplary embodiment.

With reference to Fig. 9, the two-wheel balance car 900 may comprise one or more of a control chip 902, a storage 904, a power supply component 906, an image acquiring component 908, a distance measuring component 910, an input/output (I/O) interface 912, a sensor component 914 and a turning control component 916.

The control chip 902 generally controls an overall control of the two-wheel balance car 900, such as operations related to moving forward, moving backward, acceleration and deceleration. Besides, the control chip 902 may also comprise one or more modules to facilitate interaction between the control chip 902 and other components. For example, the control chip 902 may comprise an image acquisition module to facilitate interaction between the image acquiring component 908 and the control chip 902.

The storage 904 is configured to store various types of data so as to support operations of the two-wheel balance car 900. Examples of these data comprise any instructions, image data and distance data of the two-wheel balance car to be operated on the two-wheel balance car 900. The storage 904 can be implemented by any type of volatile or nonvolatile storage devices or a combination thereof, such as Static Random Access Memory (SRAM), Electrically Erasable Programmable Read Only Memory (EEPROM), Erasable Programmable Read Only Memory (EPROM), Programmable Read Only memory (PROM), Read Only Memory (ROM), magnetic memory, flash memory, magnetic disk or optical disc.

The power supply component 906 supplies electric power to the various components of the two-wheel balance car 900. The power component 906 may include a power supply management system, one or more power supplies, and other components related to generation, management and electric power distribution of the two-wheel balance car 900.

The image acquiring component 908 is included in the two-wheel balance car 900. In some embodiments, the image acquiring component 908 comprises a front camera and/or a rear camera. When the two-wheel balance car 900 is in an operation mode, such as capture mode or video mode, the front camera and/or rear camera can receive external multimedia data. Each of the front camera and the rear camera can be a fixed optical lens system or can have focal lengths and optical zoom functionality.

The distance measuring component 910 is configured to transmit and/or receive the detection signal. For example, the distance measuring component 910 includes a laser transmitter, when the two-wheel balance car 900 is in an operation mode, such as when it receives a reflected laser, the laser transmitter is configured to receive the reflected signal of the detection signal. The received reflected signal can be further stored in the storage 904.

The I/O interface 912 provides interface between the control chip 902 and the peripheral interface modules, and the peripheral interface modules may be USB flash disk and audio player, etc..

The sensor component 914 comprises one or more sensors for providing condition assessment of every aspect for the two-wheel balance car 900. For example, the sensor component 914 can detect an open/close state of the two-wheel balance car 900, and can detect a change in orientation or in acceleration/deceleration of the two-wheel balance car 900. The sensor component 914 may comprise a proximity sensor which is configured for detecting existence of nearby objects without physical contact. The sensor component 914 may also comprise an optical sensor, such as CMOS or CCD image sensor, to be used in imaging applications. In some embodiments, the sensor component 914 may also comprise an acceleration sensor, a gyroscope sensor, a magnetic sensor, a pressure sensor or a temperature sensor.

The turning control component 916 is configured to facilitate control of turning of the two-wheel balance car 900. The turning control component 916 may be a manual controlled turning control component, and may also be a leg controlled turning control component.

In exemplary embodiments, the two-wheel balance car 900 can be implemented by one or more of Application Specific Integrated Circuit (ASIC), Digital Signal Processor (DSP), Digital Signal Processing Device (DSPD), Programmable Logic Device (PLD), Field Programmable Gate Array (FPGA), controller, microcontroller, microprocessor or other electronic elements, for performing the above mentioned control method for a two-wheel balance car.

## Claims

1. A control method used for a two-wheel balance car, the two-wheel balance car comprising two parallel wheels and a turning control component for facilitating control of turning of the two-wheel balance car, wherein the turning control component is implemented through manual control or leg control, and the method comprising:
identifying (201) the type of an obstacle in front of any of the wheels, and the type comprising impassable obstacle;
if the type of the obstacle is the impassable obstacle, controlling (202) the two-wheel balance car to decelerate, and shielding the turning control component so that said two-wheel balance car is prevented to turn in response to a user control or misoperation,
the method being **characterized in that** said obstacle is identified as impassable type if the height of said obstacle is greater than a predetermined threshold corresponding to the maximum height of an obstacle that can be passed by the two-wheel balance car;
the method being further **characterized in that**, the type further comprises: passable obstacle that can be passed by the two-wheel balance car only when accelerated; said obstacle being identified as passable type if the height of said obstacle is less than the predetermined threshold and greater than a predetermined value corresponding to the maximum height of the obstacle that can be passed by the two-wheel balance car without acceleration ;
and **in that** the method further comprises:
if the type of the obstacle is the passable obstacle, increasing (309) the driving force to the two-wheel balance car to continue moving.

2. The method according to the claim 1, **characterized in that** the step of identifying the type of the obstacle in front of any of the wheels comprises:
measuring (301) the height of the obstacle in front of any of the wheels by a distance measuring component.

3. The method according to claim 1, **characterized in that** the step of identifying the type of the obstacle in front of any of the wheels comprises:
acquiring (501) an image frame in front of any of the wheels by an image acquiring component;
identifying (502) the obstacle in the image frame;
calculating (503) the height of the obstacle identified;

4. The method according to any one of the claims 1 to 3, **characterized in that**, the method further comprises:
measuring (507) the distance from the obstacle to the two-wheel balance car;
detecting (508) whether the distance is less than a predetermined distance;
if the distance is less than the predetermined distance, executing (509) the step of controlling the two-wheel balance car to decelerate and shield the turning control component.

5. The method according to any one of the claims 1 to 4, **characterized in that**, the method further comprises:
if the type of the obstacle is the impassable obstacle, providing (509) an obstacle prompt in a predetermined mode;
wherein, the predetermined mode comprising at least one of playing a prompt tone, vibrating a predetermined part of the two-wheel balance car, and flickering a signal light.

6. A control apparatus for a two-wheel balance car comprising two parallel wheels and a turning control component for facilitating control of turning of the two-wheel balance car, wherein the turning control component is implemented through manual control or leg control, the apparatus comprising:
an identifying module (710) configured to identify the type of an obstacle in front of any of the wheels, and the type comprising: impassable obstacle;
a control module (720) configured to control the two-wheel balance car to decelerate, and shield the turning control component so that said two-wheel balance car is prevented to turn in response to a user control or misoperation, when the type of the obstacle identified by the identifying module is the impassable obstacle, the apparatus being **characterized in that** said obstacle is identified as impassable type if the height of said obstacle is greater than a predetermined threshold corresponding to the maximum height of an obstacle that can be passed by the two-wheel balance car;
the apparatus being further **characterized in that**, the type further comprises: passable obstacle that can be passed by the two-wheel balance car only when accelerated; said obstacle is identified as passable type if the height of said obstacle is less than the predetermined threshold and greater than a predetermined value corresponding to the maximum height of the obstacle that can be passed by the two-wheel balance car without acceleration;
and **in that** the apparatus further comprises:
an accelerating module (830) configured to increase a driving force to the two-wheel balance car to continue moving, when the type of the obstacle identified by the identifying module is the passable obstacle.

7. The apparatus according to claim 6, **characterized in that**, the identifying module comprises:
a height measuring sub-module (811) configured to measure the height of the obstacle in front of any of the wheels by means of a distance measuring component.
a first detecting sub-module (812) configured to detect whether the height of the obstacle measured by the height measuring sub-module is greater than said predetermined threshold;
a first identifying sub-module (813) configured to identify the obstacle as the impassable type, when the height of the obstacle detected by the first detecting sub-module is greater than said predetermined threshold.

8. The apparatus according to any one of claims 6 to 7, **characterized in that**, the identifying module further comprises:
an image acquiring sub-module (814) configured to acquire an image frame in front of any of the wheels by means of an image acquiring component;
an image identifying sub-module (815) configured to identify the obstacle in the image frame acquired by the image acquiring sub-module;
a height calculating sub-module (816) configured to calculate the height of the obstacle identified by the image identifying sub-module;
a second detecting sub-module (817) configured to detect whether the height of the obstacle calculated by the height calculating sub-module is greater than said predetermined threshold;
a second identifying sub-module (818) configured to identify the obstacle as the impassable type, when the height of the obstacle detected by the second detecting sub-module is greater than said predetermined threshold.

9. The apparatus according to any one of claims 6 to 8, **characterized in that**, the apparatus further comprises:
a distance measuring module (840) configured to measure a distance from the obstacle to the two-wheel balance car;
a distance detecting module (850) configured to detect whether the distance measured by the distance measuring module is less than a predetermined distance;
the control module being further configured to control the two-wheel balance car to decelerate, and shield the turning control component, when the distance detected by the distance detecting module is less than the predetermined distance,.

10. The apparatus according to any one of claims 6 to 9, **characterized in that**, the apparatus further comprises:
a prompt module (860) configured to provide an obstacle prompt in a predetermined mode, when the type of the obstacle identified by the identifying module is the impassable obstacle,;
wherein, the predetermined mode comprises at least one of playing a prompt tone, vibrating a predetermine part of the two-wheel balance car, and flickering a signal light.

11. A two-wheel balance car comprising two parallel wheels, and comprising:
a control chip (902) ;
a storage (904) for storing instructions executable by the control chip;
a turning control component (916) connected to the control chip;
wherein, the control chip is configured to implement the method of claim 1.

12. A computer program including instructions for executing the steps of a control method used for a two-wheel balance car according to any one of claims 1 to 5 when said program is executed by a computer.

13. A recording medium readable by a computer and having recorded thereon a computer program including instructions for executing the steps of a control method used for a two-wheel balance car according to any one of claims 1 to 5.

## Patentansprüche

1. Steuerungsverfahren, das für einen Zweirad-Gleichgewichtswagen verwendet wird, wobei der Zweirad-Gleichgewichtswagen zwei parallele Räder und eine Drehsteuerungskomponente zum Ermöglichen des Steuerns des Drehens des Zweirad-Gleichgewichtswagens umfasst, wobei die Drehsteuerungskomponente durch manuelle Steuerung oder Fußsteuerung implementiert ist, und wobei das Verfahren umfasst:
Identifizieren (201) des Typs eines Hindernisses vor jedem der Räder, wobei der Typ ein unpassierbares Hindernis umfasst,
wenn der Typ des Hindernisses das unpassierbare Hindernis ist, Steuern (202) des Zweirad-Gleichgewichtswagens so, dass er abbremst, und Abschirmen der Drehsteuerungskomponente, so dass verhindert wird, dass der Zweirad-Gleichgewichtswagen als Reaktion auf eine Benutzersteuerung oder -fehlbedienung dreht,
wobei das Verfahren **dadurch gekennzeichnet ist, dass** das Hindernis als unpassierbarer Typ identifiziert wird, wenn die Höhe des Hindernisses größer als ein vorbestimmter Grenzwert ist, der der maximalen Höhe eines Hindernisses entspricht, das vom Zweirad-Gleichgewichtswagen passiert werden kann, wobei
das Verfahren ferner **dadurch gekennzeichnet ist, dass** der Typ ferner umfasst: ein passierbares Hindernis, das von dem Zweirad-Gleichgewichtswagen nur passiert werden kann, wenn er beschleunigt wird, wobei das Hindernis als passierbarer Typ identifiziert wird, wenn die Höhe des Hindernisses kleiner als der vorbestimmte Grenzwert und größer als ein vorbestimmter Wert ist, welcher der maximalen Höhe des Hindernisses, das von dem Zweirad-Gleichgewichtswagen ohne Beschleunigung passiert werden kann, entspricht,
und wobei das Verfahren ferner umfasst:
wenn der Typ des Hindernisses das passierbare Hindernis ist, Erhöhen (309) der Antriebskraft zu dem Zweirad-Gleichgewichtswagen, so dass er sich weiterhin bewegt.

2. Verfahren nach Anspruch 1, **dadurch gekennzeichnet, dass** der Schritt des Identifizierens des Typs des Hindernisses vor jedem der Räder umfasst:
Messen (301) der Höhe des Hindernisses vor jedem der Räder durch eine Entfernungsmesskomponente.

3. Verfahren nach Anspruch 1, **dadurch gekennzeichnet, dass** der Schritt des Identifizierens des Typs des Hindernisses vor jedem der Räder umfasst:
Erfassen (501) eines Bildrahmens vor jedem der Räder durch eine Bilderfassungskom ponente,
Identifizieren (502) des Hindernisses in dem Bildrahmen und
Berechnen (503) der Höhe des identifizierten Hindernisses.

4. Verfahren nach einem der Ansprüche 1 bis 3, **dadurch gekennzeichnet, dass** das Verfahren ferner umfasst:
Messen (507) der Entfernung von dem Hindernis zu dem Zweirad-Gleichgewichtswagen,
Erkennen (508), ob die Entfernung kleiner als eine vorbestimmte Entfernung ist, und
wenn die Entfernung kleiner als die vorbestimmte Entfernung ist, Ausführen (509) des Schritts des Steuerns des Zweirad-Gleichgewichtswagens, so dass er abbremst, und Abschirmen der Drehsteuerungskomponente.

5. Verfahren nach einem der Ansprüche 1 bis 4, **dadurch gekennzeichnet, dass** das Verfahren ferner umfasst:
wenn der Typ des Hindernisses das unpassierbare Hindernis ist, Bereitstellen (509) einer Hindernismeldung in einem vorbestimmten Modus,
wobei der vorbestimmte Modus mindestens eines von einem Wiedergeben eines Signaltons, Vibrieren eines vorbestimmten Teils des Zweirad-Gleichgewichtswagens und Flackern eines Signallichts umfasst.

6. Steuerungsvorrichtung für einen Zweirad-Gleichgewichtswagen, der zwei parallele Räder und eine Drehsteuerungskomponente zum Ermöglichen des Steuerns des Drehens des Zweirad-Gleichgewichtswagens umfasst, wobei die Drehsteuerungskomponente durch manuelle Steuerung oder Fußsteuerung implementiert ist, wobei die Vorrichtung umfasst:
ein Identifizierungsmodul (710), das dazu ausgestaltet ist, den Typ eines Hindernisses vor jedem der Räder zu identifizieren, und wobei der Typ ein unpassierbares Hindernis umfasst,
ein Steuerungsmodul (720), das dazu ausgestaltet ist, den Zweirad-Gleichgewichtswagen so zu steuern, dass er abbremst, und die Drehsteuerungskomponente abzuschirmen, so dass verhindert wird, dass der Zweirad-Gleichgewichtswagen als Reaktion auf eine Benutzersteuerung oder -fehlbedienung dreht, wenn der Typ des Hindernisses, das von dem Identifizierungsmodul identifiziert wird, das unpassierbare Hindernis ist, wobei die Vorrichtung **dadurch gekennzeichnet ist, dass** das Hindernis als unpassierbarer Typ identifiziert wird, wenn die Höhe des Hindernisses größer als ein vorbestimmter Grenzwert ist, die der maximalen Höhe eines Hindernisses entspricht, das von dem Zweirad-Gleichgewichtswagen passiert werden kann,
wobei die Vorrichtung ferner **dadurch gekennzeichnet ist, dass** der Typ ferner umfasst: ein passierbares Hindernis, das von dem Zweirad-Gleichgewichtswagen nur passiert werden kann, wenn er beschleunigt wird, wobei das Hindernis als passierbarer Typ identifiziert wird, wenn die Höhe des Hindernisses kleiner als der vorbestimmte Grenzwert und größer als ein vorbestimmter Wert ist, welcher der maximalen Höhe des Hindernisses, das von dem Zweirad-Gleichgewichtswagen ohne Beschleunigung passiert werden kann, entspricht,
und dass die Vorrichtung ferner umfasst:
ein Beschleunigungsmodul (830), das dazu ausgestaltet ist, eine Antriebskraft zu dem Zweirad-Gleichgewichtswagen so zu erhöhen, dass er sich weiterhin bewegt, wenn der Typ des Hindernisses, das von dem Identifizierungsmodul identifiziert wird, das passierbare Hindernis ist.

7. Vorrichtung nach Anspruch 6, **dadurch gekennzeichnet, dass** das Identifizierungsmodul umfasst:
ein Höhenmess-Untermodul (811), das dazu ausgestaltet ist, die Höhe des Hindernisses vor jedem der Räder mittels einer Entfernungsmesskomponente zu messen,
ein erstes Erkennungs-Untermodul (812), das dazu ausgestaltet ist, zu erkennen, ob die Höhe des Hindernisses, die von dem Höhenmess-Untermodul gemessen wird, größer als der vorbestimmte Grenzwert ist,
ein erstes Identifizierungs-Untermodul (813), das dazu ausgestaltet ist, das Hindernis als den unpassierbaren Typ zu identifizieren, wenn die Höhe des Hindernisses, das von dem ersten Erkennungs-Untermodul erkannt wird, größer als der vorbestimmte Grenzwert ist.

8. Vorrichtung nach einem der Ansprüche 6 bis 7, **dadurch gekennzeichnet, dass** das Identifizierungsmodul ferner umfasst:
ein Bilderfassungs-Untermodul (814), das dazu ausgestaltet ist, einen Bildrahmen vor jedem der Räder mittels einer Bilderfassungskomponente zu erfassen,
ein Bildidentifizierungs-Untermodul (815), das dazu ausgestaltet ist, das Hindernis in dem Bildrahmen zu identifizieren, der von dem Bilderfassungs-Untermodul erfasst wird,
ein Höhenberechnungs-Untermodul (816), das dazu ausgestaltet ist, die Höhe des Hindernisses zu berechnen, das von dem Bildidentifizierungs-Untermodul identifiziert wird,
ein zweites Erkennungs-Untermodul (817), das dazu ausgestaltet ist, zu erkennen, ob die Höhe des Hindernisses, die von dem Höhenberechnungs-Untermodul berechnet wird, größer als der vorbestimmte Grenzwert ist,
ein zweites Identifizierungs-Untermodul (818), das dazu ausgestaltet ist, das Hindernis als den unpassierbaren Typ zu identifizieren, wenn die Höhe des Hindernisses, das von dem zweiten Erkennungs-Untermodul erkannt wird, größer als der vorbestimmte Grenzwert ist.

9. Vorrichtung nach einem der Ansprüche 6 bis 8, **dadurch gekennzeichnet, dass** die Vorrichtung ferner umfasst:
ein Entfernungsmessmodul (840), das dazu ausgestaltet ist, eine Entfernung von dem Hindernis zu dem Zweirad-Gleichgewichtswagen zu messen, und
ein Entfernungserkennungsmodul (850), das dazu ausgestaltet ist, zu erkennen, ob die Entfernung, die von dem Entfernungsmessmodul gemessen wird, kleiner als eine vorbestimmte Entfernung ist, wobei
das Steuerungsmodul, das ferner dazu ausgestaltet ist, den Zweirad-Gleichgewichtswagen so zu steuern, dass er abbremst, und die Drehsteuerungskomponente abzuschirmen, wenn die Entfernung, die von dem Entfernungserkennungsmodul erkannt wird, kleiner als die vorbestimmte Entfernung ist.

10. Vorrichtung nach einem der Ansprüche 6 bis 9, **dadurch gekennzeichnet, dass** die Vorrichtung ferner umfasst:
ein Meldungsmodul (860), das dazu ausgestaltet ist, eine Hindernismeldung in einem vorbestimmten Modus bereitzustellen, wenn der Typ des Hindernisses, das von dem Identifizierungsmodul identifiziert wird, das unpassierbare Hindernis ist,
wobei der vorbestimmte Modus mindestens eines von einem Wiedergeben eines Signaltons, Vibrieren eines vorbestimmten Teils des Zweirad-Gleichgewichtswagens und Flackern eines Signallichts umfasst.

11. Zweirad-Gleichgewichtswagen, umfassend zwei parallele Räder und umfassend:
einen Steuerungschip (902),
einen Speicher (904) zum Speichern von Anweisungen, die von dem Steuerungschip ausführbar sind,
eine Drehsteuerungskomponente (916), die mit dem Steuerungschip verbunden ist,
wobei der Steuerungschip dazu ausgestaltet ist, das Verfahren nach Anspruch 1 zu implementieren.

12. Computerprogamm, das Anweisungen zum Ausführen der Schritte eines Steuerungsverfahrens beinhaltet, das für einen Zweirad-Gleichgewichtswagen nach einem der Ansprüche 1 bis 5 verwendet wird, wenn das Programm von einem Computer ausgeführt wird.

13. Aufzeichnungsmedium, das von einem Computer gelesen werden kann und auf dem ein Computerprogramm aufgezeichnet ist, das Anweisungen zum Ausführen der Schritte eines Steuerungsverfahrens beinhaltet, das für einen Zweirad-Gleichgewichtswagen nach einem der Ansprüche 1 bis 5 verwendet wird.

## Revendications

1. Procédé de commande utilisé pour un gyropode à deux roues, le gyropode à deux roues comprenant deux roues parallèles et un composant de commande de braquage pour faciliter la commande de braquage du gyropode à deux roues, dans lequel le composant de commande de braquage est mis en œuvre par une commande manuelle ou une commande par les jambes, et le procédé comprenant :
l'identification (201) du type d'un obstacle à l'avant de l'une quelconque des roues, et le type comprenant un obstacle infranchissable ;
si le type de l'obstacle est l'obstacle infranchissable, la commande (202) du gyropode à deux roues pour décélérer, et le masquage du composant de commande de braquage de sorte que ledit gyropode à deux roues soit empêché de braquer en réponse à une commande d'utilisateur ou à un dysfonctionnement,
le procédé étant **caractérisé en ce que** ledit obstacle est identifié comme étant du type infranchissable si la hauteur dudit obstacle est supérieure à un seuil prédéterminé correspondant à la hauteur maximum d'un obstacle qui peut être franchi par le gyropode à deux roues ;
le procédé étant **caractérisé en outre en ce que** le type comprend en outre : un obstacle franchissable qui ne peut être franchi par le gyropode à deux roues que lorsqu'il est accéléré ; ledit obstacle étant identifié comme étant du type franchissable si la hauteur dudit obstacle est inférieure au seuil prédéterminé et supérieure à une valeur prédéterminée correspondant à la hauteur maximum de l'obstacle qui peut être franchi par le gyropode à deux roues sans accélération ;
et **en ce que** le procédé comprend en outre :
si le type de l'obstacle est l'obstacle franchissable, l'augmentation (309) de la force d'entraînement du gyropode à deux roues pour poursuivre le déplacement.

2. Procédé selon la revendication 1, **caractérisé en ce que** l'étape d'identification du type de l'obstacle à l'avant de l'une quelconque des roues comprend :
la mesure (301) de la hauteur de l'obstacle à l'avant de l'une quelconque des roues par un composant de mesure de distance.

3. Procédé selon la revendication 1, **caractérisé en ce que** l'étape d'identification du type de l'obstacle à l'avant de l'une quelconque des roues comprend :
l'acquisition (501) d'une trame d'image à l'avant de l'une quelconque des roues par un composant d'acquisition d'image ;
l'identification (502) de l'obstacle dans la trame d'image ;
le calcul (503) de la hauteur de l'obstacle identifié.

4. Procédé selon l'une quelconque des revendications 1 à 3, **caractérisé en ce que** le procédé comprend en outre :
la mesure (507) de la distance entre l'obstacle et le gyropode à deux roues ;
la détection (508) si la distance est inférieure à une distance prédéterminée ;
si la distance est inférieure à la distance prédéterminée, l'exécution (509) de l'étape de commande du gyropode à deux roues pour décélérer et masquer le composant de commande de braquage.

5. Procédé selon l'une quelconque des revendications 1 à 4, **caractérisé en ce que** le procédé comprend en outre :
si le type de l'obstacle est l'obstacle infranchissable, la fourniture (509) d'un avertissement d'obstacle dans un mode prédéterminé ;
dans lequel le mode prédéterminé comprend au moins l'un de l'émission d'une tonalité d'avertissement, de la vibration d'une partie prédéterminée du gyropode à deux roues, et du clignotement d'un signal lumineux.

6. Appareil de commande pour un gyropode à deux roues comprenant deux roues parallèles et un composant de commande de braquage pour faciliter la commande de braquage du gyropode à deux roues, dans lequel le composant de commande de braquage est mis en œuvre par une commande manuelle ou une commande par les jambes, l'appareil comprenant :
un module d'identification (710) configuré pour identifier le type d'un obstacle à l'avant de l'une quelconque des roues, et le type comprenant : un obstacle infranchissable ;
un module de commande (720) configuré pour commander le gyropode à deux roues pour décélérer, et masquer le composant de commande de braquage de sorte que ledit gyropode à deux roues soit empêché de braquer en réponse à une commande d'utilisateur ou à un dysfonctionnement, lorsque le type de l'obstacle identifié par le module d'identification est l'obstacle infranchissable, l'appareil étant **caractérisé en ce que** ledit obstacle est identifié comme étant du type infranchissable si la hauteur dudit obstacle est supérieure à un seuil prédéterminé correspondant à la hauteur maximum d'un obstacle qui peut être franchi par le gyropode à deux roues ;
l'appareil étant **caractérisé en outre en ce que** le type comprend en outre : un obstacle franchissable qui ne peut être franchi par le gyropode à deux roues que lorsqu'il est accéléré ; ledit obstacle est identifié comme étant du type franchissable si la hauteur dudit obstacle est inférieure au seuil prédéterminé et supérieure à une valeur prédéterminée correspondant à la hauteur maximum de l'obstacle qui peut être franchi par le gyropode à deux roues sans accélération ;
et **en ce que** l'appareil comprend en outre :
un module d'accélération (830) configuré pour augmenter une force d'entraînement du gyropode à deux roues pour poursuivre le déplacement, lorsque le type de l'obstacle identifié par le module d'identification est l'obstacle franchissable.

7. Appareil selon la revendication 6, **caractérisé en ce que** le module d'identification comprend :
un module secondaire de mesure de hauteur (811) configuré pour mesurer la hauteur de l'obstacle à l'avant de l'une quelconque des roues au moyen d'un composant de mesure de distance ;
un premier module secondaire de détection (812) configuré pour détecter si la hauteur de l'obstacle mesurée par le module secondaire de mesure de hauteur est supérieure audit seuil prédéterminé ;
un premier module secondaire d'identification (813) configuré pour identifier l'obstacle comme étant du type infranchissable, lorsque la hauteur de l'obstacle détectée par le premier module secondaire de détection est supérieure audit seuil prédéterminé.

8. Appareil selon l'une quelconque des revendications 6 et 7, **caractérisé en ce que** le module d'identification comprend en outre :
un module secondaire d'acquisition d'image (814) configuré pour acquérir une trame d'image à l'avant de l'une quelconque des roues au moyen d'un composant d'acquisition d'image ;
un module secondaire d'identification d'image (815) configuré pour identifier l'obstacle dans la trame d'image acquise par le module secondaire d'acquisition d'image ;
un module secondaire de calcul de hauteur (816) configuré pour calculer la hauteur de l'obstacle identifié par le module secondaire d'identification d'image ;
un deuxième module secondaire de détection (817) configuré pour détecter si la hauteur de l'obstacle calculée par le module secondaire de calcul de hauteur est supérieure audit seuil prédéterminé ;
un deuxième module secondaire d'identification (818) configuré pour identifier l'obstacle comme étant du type infranchissable, lorsque la hauteur de l'obstacle détectée par le deuxième module secondaire de détection est supérieure audit seuil prédéterminé.

9. Appareil selon l'une quelconque des revendications 6 à 8, **caractérisé en ce que** l'appareil comprend en outre :
un module de mesure de distance (840) configuré pour mesurer une distance entre l'obstacle et le gyropode à deux roues ;
un module de détection de distance (850) configuré pour détecter si la distance mesurée par le module de mesure de distance est inférieure à une distance prédéterminée ;
le module de commande étant en outre configuré pour commander le gyropode à deux roues pour décélérer, et masquer le composant de commande de braquage, lorsque la distance détectée par le module de détection de distance est inférieure à la distance prédéterminée.

10. Appareil selon l'une quelconque des revendications 6 à 9, **caractérisé en ce que** l'appareil comprend en outre :
un module d'avertissement (860) configuré pour fournir un avertissement d'obstacle dans un mode prédéterminé, lorsque le type de l'obstacle identifié par le module d'identification est l'obstacle infranchissable ;
dans lequel le mode prédéterminé comprend au moins l'un de l'émission d'une tonalité d'avertissement, de la vibration d'une partie prédéterminée du gyropode à deux roues, et du clignotement d'un signal lumineux.

11. Gyropode à deux roues comprenant deux roues parallèles, et comprenant :
une puce de commande (902) ;
une mémoire (904) pour mémoriser des instructions exécutables par la puce de commande ;
un composant de commande de braquage (916) connecté à la puce de commande ;
dans lequel la puce de commande est configurée pour mettre en œuvre le procédé selon la revendication 1.

12. Programme d'ordinateur comprenant des instructions pour exécuter les étapes d'un procédé de commande utilisé pour un gyropode à deux roues selon l'une quelconque des revendications 1 à 5 lorsque ledit programme est exécuté par un ordinateur.

13. Support d'enregistrement pouvant être lu par un ordinateur et sur lequel est enregistré un programme d'ordinateur comprenant des instructions pour exécuter les étapes d'un procédé de commande utilisé pour un gyropode à deux roues selon l'une quelconque des revendications 1 à 5.
